Europäisches Patentamt

European Patent Office

Office européen des brevets

(19)

(11) Publication number: **0 129 404**

**B1**

(12)

# EUROPEAN PATENT SPECIFICATION

(45) Date of publication of patent specification: 29.07.87

(51) Int. Cl.⁴: **F 16 B 35/04**

(21) Application number: 84303998.3

(22) Date of filing: 13.06.84

(54) **Fixings including screws and clamp plates.**

(30) Priority: 15.06.83 GB 8316327

(43) Date of publication of application:
27.12.84 Bulletin 84/52

(45) Publication of the grant of the patent:
29.07.87 Bulletin 87/31

(84) Designated Contracting States:
AT BE CH DE FR GB IT LI LU NL SE

(56) References cited:
DE-A-2 853 976
FR-A-2 478 755
GB-A-2 124 318
US-A-3 478 639

(73) Proprietor: ITW Limited
ITW House 2A Oxford Road East
Windsor Berkshire (GB)

(72) Inventor: Hewison, George David
18 Earlsbourne Church Cookham
Aldershot Hants (GB)

(74) Representative: Rackham, Stephen Neil et al
GILL JENNINGS & EVERY 53-64 Chancery Lane
London WC2A 1HN (GB)

## Description

In a form of construction used currently for roofs which are flat, or nearly flat, a supporting structure is erected on which is carried corrugated steel sheet, usually with trapezoidal corrugations. On top of the sheet is laid a layer of insulation, and on top of that is laid a waterproof membrane. The membrane and insulation are held in position by fixings comprising a combination of a screw having a head, a shank and a drilling tip, the head including a clamping face which tapers towards the shank, and a clamp plate formed from sheet metal and including a central hole through which the shank of the screw passes and engages the sheet whilst the head of the screw engages the clamp plate to distribute the fixing force over the insulation.

In one method of assembly, the insulation is laid first, and then the membrane is laid in a series of strips side-by-side, with each strip overlapping the previous one. As each strip is laid, the screws of the fixings are driven through the membrane and insulation adjacent the free edge of the strip, and then these screws, and their clamp plates, are covered by the overlapping edge of the next strip of membrane.

In another method, the insulation is laid, and then screws of the fixings are driven through the insulation, each clamp plate having on its upper surface a material compatible with the material of the membrane. Just before each strip of membrane is laid, a solvent is applied to the upper surface of the relevant clamp plates, and the consequence is that the membrane becomes united with the upper surface of the clamp plates.

A number of problems are being encountered with such constructions. When wind blows over the roof, it can cause vibration, and the effect of this vibration is to cause the screws to turn in a retrograde direction, so that they become loose, or even disconnected from the underlying sheet. Also, wind can cause movement of the membrane in the form of a train of waves passing across the roof. Such wave motion can cause current clamp plates to bend. With the first described method of assembly, a bent clamp plate can enable an opening in the membrane, formed by the screw, to stretch until the membrane pulls over the clamp plate and is thus totally released from the screw.

From time to time, people walk on a flat roof, and the fixings should be capable of withstanding this. What can happen is that, if a person stands on part of clamp plate, then the clamp plate is pressed downwards relative to the head of its associated screw. The material of the insulation is such that it does not restore the clamp plate elastically to its original position. Subsequently, therefore, the screw is no longer under tension, and thus it can more easily rotate in a retrograde direction, and also rock from side to side. Furthermore, since the head of the screw stands proud from the upper surface of the clamp plate it may punch a hole through the overlapped strip of membrane, whereupon local water leakage can occur.

It is also desirable that the clamp plate should be so constructed that the tightening of the screw to the desired tension does not cause significant bending of the clamp plate.

The present invention relates to fixings, screws and to clamp plates which have been developed principally for use in roofing structures of the kind described. They may be used in both the methods of assembly described in this specification. Thus a user needs to keep only a smaller variety of screws in stock.

According to a first aspect of this invention such a fixing is characterised in that the clamping face of the screw includes external angles in cross section, and the shank has, in succession from the head to the drilling tip, a first portion, which is unthreaded, a second portion which is threaded, and a third portion which is threaded, the diameter of the first portion being substantially equal to the root diameter of the second portion, and the crest diameter of the second portion substantially exceeding the crest diameter of the third portion; and in that the periphery of the clamp plate has an elongate symmetrical shape with a minor dimension which is several times the diameter of the hole and a major dimension substantially greater than the minor dimension, and in that the clamp plate is generally flat with a countersink around the hole, and with two endless gutter-like deformations a first one adjacent the periphery, and a second one approximately midway between the hole and the first one.

US—A—3478639 discloses a fastener for use in fixing panels comprising relatively soft insulation material covered by a thin metal sheet to a purlin. The fastener includes a head having a clamping face, a shank, and a drilling tip, the shank having in succession from the head to the drilling tip, a first portion which is unthreaded, a second portion which is threaded, and a third portion which is threaded, the diameter of the first portion being substantially equal to the root diameter of the second portion, and the crest diameter of the second portion substantially exceeding the crest diameter of the third portion. The fastener also includes wings or lugs on the shank between the second and third portions to prevent the fastener being severed too far into the purlin.

According to a second aspect of this invention the clamping face tapers toward the shank, includes external angles in cross section.

According to a third aspect of this invention such a clamp plate is characterised in that the periphery of the clamp plate has an elongate symmetrical shape with a minor dimension which is several times the diameter of the hole and a major dimension substantially greater than the minor dimension, and in that the clamp plate is generally flat with a countersink around the hole, and with two endless gutter-like deformations a first one adjacent the periphery, and a second one approximately midway between the hole and the first one.

Preferably the external angles are present by virtue of the clamping face of the screw having a basic frustoconical shape, from which project a plurality of ribs which are elongate in directions from the top of the head to the shank. As one alternative, the basic shape of the clamping face may be a truncated pyramid for example one with six angles.

The countersink in the clamp plate may be of frustoconical shape or may be non-circular in shape, i.e. be prepared with a shape complementary to a screw head which tapers towards the screw shank, and which has external angles in cross section. In the first case when the clamping face of the screw includes external angles these dig into the countersink to prevent retrograde rotation of the screw with respect to the clamp plate and in the second case since the clamping face of the screw and the countersink of the clamp plate are both non-circular again retrograde rotation of the screw with respect to the clamp plate is prevented.

One example of a fixing, a screw and a clamp plate, in accordance with this invention, together with some modifications, will now be described with reference to the accompanying drawings, in which:—

Figure 1 is a vertical section through the axis of a screw and clamp plate in position in a fragment of roofing structure;

Figure 2 is a side elevation of the screw on a larger scale:

Figure 3 is an axial view of the screw from below;

Figure 4 is a plan of the clamp plate on the same scale as Figure 1; and,

Figures 5 and 6 are sections on the lines V—V and VI—VI in Figure 4; and,

Figure 7 is a section similar to Figure 6 but of a modified clamp plate.

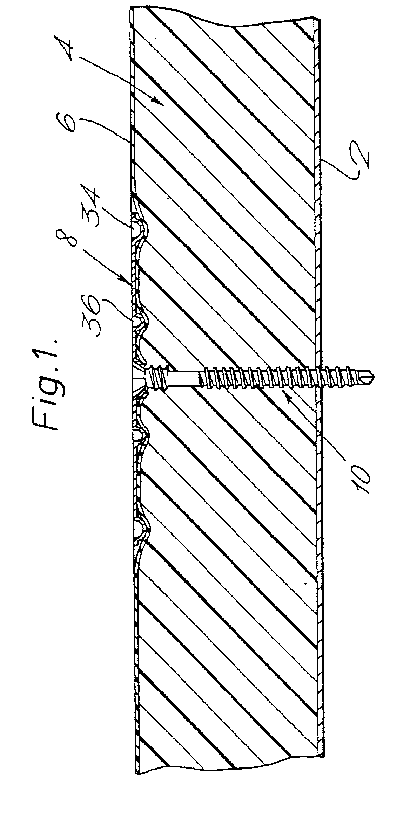

Figure 1 shows at 2 the crest of one corrugation of a steel sheet forming part of a roofing structure. 4 indicates a layer of insulation and 6 indicates a portion of a waterproof membrane. The membrane 6 and insulation 4 are clamped to the sheet 2 by means of a large clamp plate 8, and a screw 10 which is in tension between the clamp plate 8 and the sheet 2.

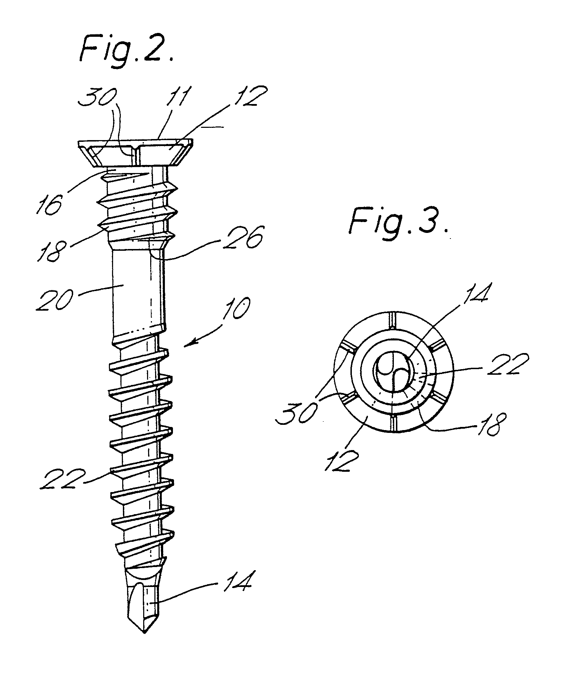

As shown on a larger scale in Figure 2, the screw 10 has a countersunk head 11 having a frustoconical clamping face 12, a shank, and a drilling tip 14. The shank has, in succession from the head 11 to the drilling tip 14, a first portion 16 which is unthreaded, a second portion 18 which is threaded, a third portion 20 which is unthreaded, and a fourth portion 22 which is threaded.

There is a central hole 24 in the clamp plate 8, through which the crests of the threaded portion 22 can pass with slight clearance. In use, after the insulation and a strip of membrane have been laid, the clamp plate 8 is placed in the desired position, and the tip 14 of the screw is inserted in the hole 24 in the clamp plate. Then the screw is driven downwards through the membrane and the insulation until the drilling tip 14 reaches the metal sheet 2. Continued driving of the screw first causes the tip 14 to drill a hole through the sheet 2, and then causes the tapered lower end of the threaded portion 22 to enter the hole in the sheet 2, and form a co-operating thread, so that the screw is then drawn downwards until the head 11 engages the clamp plate 8, as described more fully below. The screw can be driven by a known driver having means for disengaging when the screw has attained the desired position, being then in tension between the clamp plate 8 and the sheet 2, so that the membrane and insulation are clamped. The portion 22 has, as shown, a buttress thread, which gives a high pull-out load in the sheet 2.

The unthreaded portion 20 is simply present to avoid the expense of forming unnecessary turns of thread on the screw, while nevertheless the portion 22 is made of sufficient length to enable the screw to be used with more than one thickness of insulation 4. For use with different thicknesses of insulation 4, screws can be made of different total lengths, but the lengths of the threaded portions 18 and 22 may be unchanged.

The threaded portion 18 has a crest diameter which is substantially larger than the internal diameter of the hole 24 in the clamp plate. The thread 18 has a tapered entering turn 26, which serves to form a co-operating internal thread in the clamp plate, and the final stage of driving the screw causes the threaded portion 18 to pass entirely through the clamp plate, until the periphery of the hole in the washer is level with the unthreaded portion 16. The axial extent of the unthreaded portion 16 is preferably matched to the dimension of the clamp plate, so that, in the final condition, the clamp plate is trapped between the head 12 and the thread 18, with substantially no freedom of relative axial movement.

In this final condition, the crest diameter of the thread 18 is sufficient to provide a support to the clamp plate against axially-directed forces. Consequently, if a person stands on the clamp plate, the centre of the clamp plate is not displaced relatively to the screw.

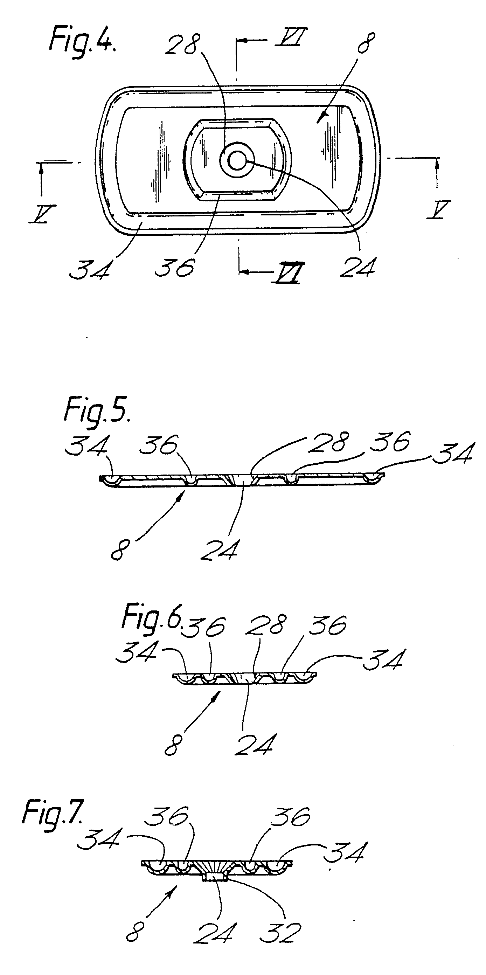

As shown in Figure 1, and also in Figure 5, the hole 24 in the clamp plate is surrounded by a countersink 28, to match the shape of the countersunk head 12 of the screw. As shown in Figure 5, the upper surface of the countersink is smooth. On the co-operating surface of the head 12, there are six radially extending, downwardly projecting ribs 30, of V-section. During the final tightening of the screw, these ribs bite into the surface of the countersink 28. Consequently, in the assembled condition, there is interengagement between the ribs 30 and the deformations in the surface of the countersink 28, this interengagement resisting any tendency for the screw to turn in a retrograde direction when the roof is subject to vibration by wind or other causes.

If desired, as indicated in Figures 4 and 6, the countersink 28 may be prepared with a series of shallow radial grooves, to co-operate with the ribs 30 on the screw head. As other alternatives, the screw head 11 may have another non-circular shape, such as hexagonal, with or without a corresponding prepared shape in the countersink in the clamp plate.

The clamp plate may be modified to include a short cylindrical portion 32 below the countersink 28, as shown in Figure 7. This can serve to strengthen the periphery of the hole in the clamp plate. In this case the axial extent of the unthreaded portion 16 of the screw should be chosen having regard to the axial extent of the portion 32 of the clamp plate.

In the example shown, the screw has an overall length of 65 mm, and the crest diameters of the portions 22 and 18 are 5.33 mm and 6.35 mm respectively. The clamp plate is of metal with a thickness 0.8 mm, and the diameter of the hole 24 is 5.1 mm.

As shown in Figure 4, the clamp plate is of elongate symmetrical shape having a minor dimension of 40 mm and a major dimension of 80 mm. The ends are eliptical, while the sides are straight.

The clamp plate is generally flat save for the countersink 28, and two endless gutter-like deformations 34 and 36. The deformation 34 runs adjacent to the periphery of the clamp plate, while the deformation 36 runs approximately midway between the hole 24 and the deformation 34. In cross section, as shown in Figures 5 and 6, the deformations are of equal depth, but the deformation 36 is narrower than the deformation 34. Both cross sections have rounded bottoms. These deformations impart considerable rigidity to the clamp plate, and ensure that the downward clamping force exerted by the screw head 12 on the countersink 28 of the clamp plate is distributed to the membrane 6 and insulation 4 over the whole area of the clamp plate. Furthermore, the clamp plate is resistant to forces applied to it by wave motion of the membrane.

If there is ever need to remove the screw intentionally, this can be done by engaging a driver with the screw head, and applying anticlockwise rotation.

**Claims**

1. A fixing comprising a screw (10) including a head (11), a shank (10), and a drilling tip (14), the head having a clamping face (12) which tapers towards the shank, and a clamp plate (8) formed from sheet metal and having a central hole (24) characterised in that the clamping face (12) of the screw includes external angles (30) in cross section, and the shank has, in succession from the head (11) to the drilling tip (14), a first portion (16), which is unthreaded, a second portion (18) which is threaded, and a third portion (22) which is threaded, the diameter of the first portion (16) being substantially equal to the root diameter of the second portion (18), and the crest diameter of the second portion (18) substantially exceeding the crest diameter of the third portion (22); and in that the periphery of the clamp plate (8) has an elongate symmetrical shape with a minor dimension which is several times the diameter of the hole (24) and a major dimension substantially greater than the minor dimension, and in that the clamp plate is generally flat with a countersink (28) around the hole (24), and with two endless gutter-like deformations (34, 36), a first one (34) adjacent the periphery, and a second one (36) approximately midway between the hole (24) and the first one (34).

2. A fixing according to claim 1, in which the external angles are present on the screw by virtue of the clamping face (12) having a basic frustoconical shape, from which project a plurality of ribs (30) which are elongate in directions from the top of the head (11) to the shank of the screw, and in which the countersink (28) is frustoconical in shape.

3. A fixing according to claim 1, in which the basic shape of the clamping face (12) of the screw is a truncated pyramid with six angles, and in which the clamp plate has a countersink (28) which is non-circular in shape and is prepared with a shape which complements that of the screw head (11).

4. A fixing according to any one of the preceding claims, in which the clamp plate (8) includes a cylindrical portion (32) surrounding the hole (24).

5. A screw (10) for use in a fixing according to anyone of the preceding claims comprising a head (11) having a clamping face, a shank, and a drilling tip (14), the shank having, in succesion from the head (11) to the drilling tip (14), a first portion (16) which is unthreaded, a second portion (18) which is threaded, and a third portion (22) which is threaded, the diameter of the first portion (16) being substantially equal to the root diameter of the second portion (18), and the crest diameter of the second portion (18) substantially exceeding the crest diameter of the third portion (22), and characterised in that the clamping face (12) tapers towards the shank, includes external angles (30) in cross section.

6. A screw according to claim 5, in which the external angles are present by virtue of the clamping face (12) having a basic frustoconical shape, from which project a plurality of ribs (30) which are elongate in directions from the top of the head (11) to the shank.

7. A screw according to claim 5, in which the basic shape of the clamping face (12) is a truncated pyramid with six angles.

8. A clamp plate (8) for use in a fixing according to anyone of the claims 1 to 4 formed from sheet metal and having a central hole (24), characterised in that the periphery of the clamp plate has an elongate symmetrical shape with a minor dimension which is several times the diameter of the hole (24) and a major dimension substantially greater than the minor dimension, and in that the clamp plate is generally flat with a countersink (28) around the hole (24), and with two endless gutter-like deformations (34, 36) a first one (34) adjacent the periphery, and a second one (36) approximately midway between the hole (24) and the first one (34).

9. A clamp plate according to claim 8, in which the countersink (28) is non-circular in shape.

10. A clamp plate according to claim 8 or 9, in which the clamp plate (8) includes a cylindrical portion (32) surrounding the hole (24).

## Patentansprüche

1. Eine Befestigung, die eine Schraube (10) umfaßt, die einen Kopf (11), einen Schaft (10), und eine Bohrspitze (14) aufweist, wobei der Kopf eine Klemmfläche (12) hat, die sich zum Schaft hin verjüngt, und eine Klemmplatte (8) aus Blech, die ein Mittelloch (24) hat, dadurch gekennzeichnet, daß die Klemmfläche (12) der Schraube im Querschnitt Vorsprünge (30) aufweist, und daß der Schaft, in der Folge vom Kopf (11) zur Bohrspitze (14), einen ersten Abschnitt (16) hat, der kein Gewinde hat, einen zweiten Abschnitt (18), der ein Gewinde hat, und einen dritten Abschnitt (22), der ein Gewinde hat, wobei der Durchmesser des ersten Abschnitts (16) im wesentlichen gleich dem Kerndurchmesser des zweiten Abschnitts (18) ist, und wobei der Spitzendurchmesser des zweiten Abschnitts (18) wesentlich größer als der Spitzendurchmesser des dritten Abschnitts (22) ist; und weiterhin dadurch gekennzeichnet, daß der Umkreis der Klemmplatte (8) eine verlängerte symmetrische Form hat, mit einer kleineren Abmessung, die mehrere Durchmesser des Lochs (24) ausmacht, und einer größeren Abmessung, die wesentlich größer als die kleinere Abmessung ist, und weiterhin dadurch gekennzeichnet, daß die Klemmplatte im wesentlichen flach ist, wobei sie eine Versenkung (28) um das Loch (24) herum aufweist, und mit zwei endlosen rinnenartigen Verformungen (34, 36), wobei die erste (34) neben der Außenkante liegt, und einer zweiten (36), die ungefähr in der Mitte zwischen dem Loch (24) und der ersten (34) liegt.

2. Eine Befestigung nach Anspruch 1, dadurch gekennzeichnet, daß die Vorsprünge auf der Schraube dadurch ausgeführt werden, daß die Klemmfläche (12) eine kegelige Grundform hat, von der eine Anzahl von Rippen (30) vorstehen, die sich in den Richtungen von der Spitze des Kopfs (11) zum Schaft des Schraube erstrecken, und dadurch gekennzeichnet, daß die Versenkung (28) eine kegelige Form hat.

3. Eine Befestigung nach Anspruch 1, in der die Grundform dem Klemmfläche (12) der Schraube ein Kegelstumpf mit sechs Ecken ist, und dadurch gekennzeichnet, daß die Klemmplatte eine Versenkung (28) hat, die in der Form unrund ist und mit einer Form versehen ist, die der des Schraubenkopfs (11) entspricht.

4. Eine Befestigung nach einem der Ansprüche 1 bis 3, dadurch gekennzeichnet, daß die Klemmplatte (8) einen zylindrischen Abschnitt (32), der das Loch (24) umfaßt, aufweist.

5. Eine Schraube zur Anwendung in einer Befestigung nach einem der Ansprüche 1 bis 4, die einen Kopf (11), der eine Klemmfläche hat, einen Schaft, und eine Bohrspitze (14), umfaßt, wobei der Schaft, infolge vom Kopf (11) zur Bohrspitze (14), einen ersten Abschnitt (16), der kein Gewinde hat, hat, einen zweiten Abschnitt (18), der ein Gewinde hat, und einen dritten Abschnitt (22), der ein Gewinde hat, wobei der Durchmesser des ersten Abschnitts (16) im wesentlichen gleich dem Kerndurchmesser des zweiten Abschnitts (18) ist, und wobei der Spitzendurchmesser des zweiten Abschnitts (18) wesentlich größer als der Spitzendurchmesser des dritten Abschnitts (22) ist, dadurch gekennzeichnet, daß sich die Klemmfläche (12) zum Schaft hin verjüngt, und dabei im Querschnitt Vorsprünge (30) enthält.

6. Eine Schraube nach Anspruch 5, dadurch gekennzeichnet, daß die Vorsprünge dadurch dargestellt werden, daß die Klemmfläche (12) eine kegelige Grundform hat, von der eine Anzahl Rippen (30) abstehen, die in den Richtungen von der Spitze des Kopfs (11) zum Schaft verlaufen.

7. Eine Schraube nach Anspruch 5, bei der die Grundfläche der Klemmfläche (12) ein Kegelstumpf mit sechs Ecken ist.

8. Eine Klemmplatte (8) aus Blech, zur Anwendung bei einer Befestigung nach einem der Ansprüche 1 bis 4, die ein Mittelloch (24) hat, dadurch gekennzeichnet, daß sie eine verlängerte symmetrische Form hat, mit einer kleineren Abmessung, die mehreren Durchmessern des Lochs (24) entspricht, und einer größeren Abmessung, die wesentlich größer als die kleinere Abmessung ist, und dadurch gekennzeichnet, daß die Klemmplatte annähernd flach ist, mit einer Versenkung (28) um das Loch (24) herum, und mit zwei endlosen rinnenartigen Verformungen (34, 36), wobei eine erste (34) neben dem Umkreis liegt, und eine zweite (36) ungefähr in der Mitte zwischen dem Loch (24) und der ersten (34) liegt.

9. Eine Klemmplatte nach Anspruch 8, bei der die Versenkung (28) eine unrunde Form hat.

10. Eine Klemmplatte nach Anspruch 8 oder 9, bei der die Klemmplatte (8) einen zylindrischen Abschnitt (32) um das Loch (34) aufweist.

## Revendications

1. Dispositif de fixation comprenant une vis (10) comportant une tête (11), une tige (10) et une pointe (14) de perçage, la tête présentant une face (12) de bridage qui s'effile vers la tige, et une plaque (8) de bridage formée en métal en feuille et présentant un trou central (24), caractécisé en ce que la face (12) de bridge de la vis comporte des angles extérieurs (30), en section transversale, et la tige comporte, successivement de la tête (11) vers la pointe (14) de perçage, un premier tronçon (16) qui n'est pas fileté, un deuxième tronçon (18) qui est fileté et un troisième tronçon (22) qui est fileté, la diamètre du premier tronçon (16) étant sensiblement égal au diamètre de pied du deuxième tronçon (18) et le diamètre de crête du deuxième tronçon (18) dépassant sensiblement le diamètre de crête du troisième tronçon (22); et en ce que la périphérie de la plaque (8) de bridage présente une forme symétrique allongée ayant une petite dimension qui est égale à plusieurs fois le diamètre du trou (24) et une grande dimension sensiblement supérieur à la petite dimension, et en ce que la plaque de bridge est globalement plate et présente une fraisure (28) autour du trou (24), et deux déformations (34, 36) analogues à des gouttières sans fin, dont une première (34) est adjacente à la périphéie et la seconde (36) se trouve approximativement à mi-distance entre le trou (24) et la première déformation (34).

2. Dispositif de fixation selon la revendication 1, dans lequel les angles extérieurs sont présents sur la vis du fait que la face (12) de bridage possède une forme tronconique de base de laquelle font saillie plusieurs nervures (30) qui sont allongées dans des directions allant du dessus de la tête (11) vers la tige de la vis, et dans lequel la fraisure (28) est de forme tronconique.

3. Dispositif de fixation selon la revendication 1, dans lequel la forme de base de la face (12) de bridage de la vis est une pyramide tronquée à six angles, et dans lequel la plaque de bridage présente une fraisure (28) qui est de forme non ciculaire et qui est préparé de façon à avoir une forme complémentaire de celle de la tête (11) de la vis.

4. Dispositif de fixation selon l'une quelconque des revendications précédentes, dans lequel la plaque (8) de bridage comporte une partie cylindrique (32) entourant le trou (24).

5. Vis (10) à utiliser dans un dispositif de fixation selon l'une quelconque des revendications précédentes, comprenant une tête (11) présentant une face de bridage, une tige et une pointe (14) de perçage, la tige comportant, successivement de la tête (11) vers la pointe (14) de perçage, un premier tronçon (16) qui n'est pas fileté, un deuxième tronçon (18) qui est fileté et un troisième tronçon (22) qui est fileté, le diamètre du premier tronçon (16) étant sensiblement égal au diamètre de pied du deuxième tronçon (18) et le diamètre de crête du deuxième tronçon (18) dépassant sensiblement le diamètre de crête du troisième tronçon (22), et caractérisée en ce que la face de bridage (12) s'effile vers la tige et comporte des angles extérieurs (30) en section transversale.

6. Vis selon la revendication 5, dans laquelle les angles extérieurs sont présents du fait que la face (12) de bridage présente une forme tronconique de base de laquelle font saillie plusieurs nervures (30) qui sont allongées dans des directions allant du dessus de la tête (11) vers la tige.

7. Vis selon la revendication 5, dans laquelle la forme de base de la face (12) de bridage est une pyramide tronquée à six angles.

8. Plaque de bridage (8) à utiliser dans un dispositif de fixation selon l'une quelconque des revendications 1 à 4, formée en métal en feuille et présentant un trou central (24), caractérisée en ce que la périphérie de la plaque de bridage possède une forme symétrique allongée ayant une petite dimension qui est égale à plusieurs fois le diamètre du trou (24) et une grande dimension sensiblement supérieur à la petite dimension, et en ce que la plaque de bridage est globalement plate et présente une fraisure (28) autour du trou (24) et deux déformations (34, 36) analogues à des gouttières sans fin dont une première (34) est adjacente à la périphérie et la seconde (36) se trouve approximativement à mi-distance entre le trou (24) et la première déformation (34).

9. Plaque de bridage selon la revendication 8, dans laquelle la fraisure (28) est de forme non circulaire.

10. Plaque de bridage selon la revendication 8 ou 9, dans laquelle la plaque de bridage (8) comporte une partie cylindrique (32) entourant le trou (24).

Fig.1.

0 129 404

### Fig.2.

### Fig.3.

0 129 404

Fig.4.

Fig.5.

Fig.6.

Fig.7.

3